# EUROPÄISCHE PATENTSCHRIFT

(11) **EP 0 540 780 B1**
(45) Veröffentlichungstag und Bekanntmachung des Hinweises auf die Patenterteilung: **02.03.1994**
(21) Anmeldenummer: 91119076.7
(22) Anmeldetag: 08.11.1991
(51) Int. Cl.: F16L 17/035, F16L 13/12

(54) **Vergiessbarer Dichteinsatz**
Moulded sealing insert
Garniture d'étanchéité moulée

(43) Veröffentlichungstag der Anmeldung: 12.05.1993
(73) Patentinhaber: WOCO Franz-Josef Wolf & Co., D-63628 Bad Soden-Salmünster (DE)
(72) Erfinder: Wolf, Franz Josef, W-6483 Bad Soden-Salmünster (DE); Lauer, Hansjörg, W-6483 Bad Soden-Salmünster (DE)
(74) Vertreter: Jaeger, Klaus, Dr.

(56) Entgegenhaltungen:
- EP-A- 0 001 385
- DE-A- 3 446 559
- FR-A- 1 552 330
- FR-A- 2 196 050

## Beschreibung

Die Erfindung betrifft einen vergießbaren Dichteinsatz aus gummielastischem Werkstoff für die Muffe einer ringgedichteten Rohrsteckverbindung, insbesondere für Rohre aus mineralischen Werkstoffen, speziell aus gebranntem Ton.

Ein stets wiederkehrendes Problem bei Steckverbindungen dieser Art, insbesondere bei Rohren aus mineralischen Werkstoffen, ist die herstellungsbedingte große Toleranz der Dichtspaltbreite. Im Bereich der oberen Grenze des Toleranzbereiches muß ein Dichtungsring ausreichend Verformungs- und/oder Verpressungsreserven aufweisen, um noch die erforderliche Dichtkraft aufzubringen. Im unteren Grenzbereich des Toleranzbereiches muß der Dichtring dagegen ausreichend verformbar und/oder fixiert sein, um beim Einschieben des Spitzendes weder beschädigt noch aus seiner Sollage gebracht zu werden.

Ein vergießbarer Dichteinsatz aus gummielastischem Werkstoff für die Muffe solcher ringgedichteten Rohrsteckverbindungen ist aus der deutschen Patentschrift DE 34 46 559 C2 bekannt. Durch das Vergießen eines zwischen dem Dichteinsatz und der Innenwand der Rohrmuffe gebildeten Ringraums mit einem formbeständig aushärtenden Harz kann bereits vorab der durch die Fertigungsmaßtoleranz des lichten Innendurchmessers verursachte Anteil an der Gesamttoleranz der Dichtspaltbreite abgefangen werden.

Im einzelnen weist der aus der deutschen Patentschrift DE 34 46 559 C2 bekannte Dichteinsatz ein Dichtlippenpaar auf, das über einen ringförmigen Basisbereich zu einem Doppellippenring miteinander verbunden ist, wobei eine erste Dichtlippe dieses Dichtlippenpaares vor dem Einschieben des Spitzendes zumindest im wesentlichen axial zur Muffenöffnung zeigt, während die zweite Dichtlippe dieses Dichtlippenpaares sich zumindest im wesentlichen radial einwärts erstreckt. Hier wie insgesamt im Rahmen der vorliegenden Beschreibung soll durch die Wendung "zumindest im wesentlichen" im Zusammenhang mit einer Bemessungsangabe oder mit der Angabe einer Ausrichtung darauf hingewiesen werden, daß die angegebenen Bemessungen oder Ausrichtungen von Teilen des Dichteinsatzes Sollwerte mit vergleichsweise großen Toleranzen bezeichnen, durch die das Wesen der Erfindung weder verändert noch die angestrebte Wirkung der Erfindung in Frage gestellt wird. Wenn also beispielsweise von der axial innenliegenden Ringlippe des Doppellippen-Dichtringes ausgesagt ist, daß diese "zumindest im wesentlichen radial" ausgerichtet ist, so bedeutet dies primär, daß diese Lippe als Kreisringscheibe ausgebildet ist. Diese Bezeichnung soll jedoch nicht ausschließen, daß diese Lippe auch konische Oberflächen aufweisen kann, und auch mit ihrer radialen Mittelebene durchaus als axial einwärts oder axial auswärts konvergierende Konusfläche ausgebildet sein kann. Dem Fachmann ist dabei ohne weiteres ersichtlich, daß alle Gestaltungsvarianten dieser axial inneren Dichtlippe ohne weiteres unter der im Toleranzrahmen durchaus exakten Bezeichnung "zumindest im wesentlichen radial ausgerichtet" bezeichnet sind.

Entsprechend ist die Angabe "zumindest im wesentlichen" auch an anderen Stellen der vorliegenden Beschreibung zu verstehen.

Der aus der deutschen Patentschrift DE 34 46 559 C2 bekannte Dichteinsatz weist neben zahlreichen Vorteilen wie insbesondere einer festen Fixierung in der Muffe und einer Verminderung der wirksamen Toleranz der Dichtspaltbreite im praktischen Einsatz doch noch einige Unzulänglichkeiten auf. So läßt sich beispielsweise beim Einführen des Spitzendes in die mit dem Dichteinsatz bestückte Muffe nicht immer zuverlässig verhindern, daß die axial ausgerichtete Dichtlippe nicht doch beschädigt oder nach axial und radial einwärts umgeschlagen und mitgenommen wird, so daß durch eine Fehllage dieser Dichtlippe die Dichtheit der Steckverbindung nicht immer gewährleistet ist.

Ausgehend von diesem Stand der Technik liegt der Erfindung die Aufgabe zugrunde, einen Dichteinsatz der aus der deutschen Patentschrift DE 34 46 559 C2 bekannten Art in ihrer Funktionssicherheit und Funktionszuverlässigkeit zu verbessern.

Die Erfindung löst diese Aufgabe in der aus dem Patentanspruch 1 ersichtlichen Weise durch eine zumindest im wesentlichen zylindrische Schutzmanschette, die als integraler Bestandteil des Dichteinsatzes an diesem angeformt ausgebildet ist. Der axial innenliegende Rand dieser Schutzmanschette ist dabei am oder doch zumindest im Bereich des Halteringes so angeformt, daß sich die Schutzmanschette zumindest im wesentlichen koaxial und zylinderflächenkomplementär zur axial auswärts weisenden Dichtlippe ausgerichtet ist. Dabei ist die Schutzmanschette axial länger als diese Dichtlippe und geht kragenseitig innenflanschartig in eine radial liegende Kreisringfläche oder flache Kegelmantelfläche mit großem, sich nach innen öffnendem Kegelwinkel, über. Dabei ist der lichte Innendurchmesser des so gebildeten Schutzmanschettenrandes vorzugsweise zumindest gleich oder geringfügig kleiner als der lichte Innendurchmesser des von der axial auswärts weisenden Dichtlippe gebildeten Innenwandzylinders.

Die Außenwandfläche der axial auswärts weisenden Dichtlippe und die Innenfläche des zylindrischen Abschnitts der Schutzmanschette, die zumindest im wesentlichen koaxial flächenkomplementär zueinander angeordnet sind, liegen vorzugsweise nicht unmittelbar aufeinander, sondern halten einen Abstand voneinander, der zumindest größenordnungsmäßig im Bereich der radialen Dicke der axial ausgerichteten Dichtlippe bzw. der Schutzmanschette liegt.

Weiterhin ist die Konfiguration des Dichteinsatzes und der Außendurchmesser der Schutzmanschette so konfiguriert, daß der Abstand zwischen der Innenwandfläche der Muffe und der Außenwandfläche der Schutzmanschette prinzipiell zwar so klein wie möglich, in jedem Fall jedoch so groß bemessen ist, daß ein freies Eingießen und Einfließen der Vergußmasse in den becherartigen Ringraum gewährleistet ist, der zwischen der Innenwand der Muffe und der gesamten Außenwand des Dichteinsatzes gebildet ist.

Durch diese Anordnung und Funktion der Schutzmanschette, die in dieser Hinsicht als Separator zwischen der Vergußmasse und der axial auswärts weisenden Dichtlippe wirkt, ist zunächst gewährleistet, daß auch in Ausnahmefällen keine unerwünschte Haftung zwischen der zylindrischen Außenwand der axial auswärts weisenden Dichtlippe und der Vergußmasse ausgebildet wird, die eine funktionell wesentliche freie Beweglichkeit dieser Dichtlippe beeinträchtigt. Darüber hinaus wird durch den Spielraum zwischen der Innenwand der Schutzmanschette und der Außenwand der Dichtlippe ein zylindermantelförmiger Ausweichraum geschaffen, in den hinein die Dichtlippe zumindest weitgehend kompressionsfrei und dehnungsfrei ausweichen kann, wenn beispielsweise Spitzenden im rauhen Baustellenbetrieb weder koaxial noch achsparallel, mehr oder minder winklig zur Mittelachse des Dichteinsatzes in diesen eingeschoben werden. Bei dem aus dem Stand der Technik bekannten Dichteinsatz hat der axial auswärts weisenden Dichtmanschette dieser Ausweichraum gefehlt, so daß beim rauhen Einführen von Spitzenden, die insbesondere im oberen Toleranzbereich des Außendurchmessers der Spitzenden lagen, die Dichtlippe häufig stark abgerieben, selten aufgerissen und nicht ganz so selten in ihrer Sollage verschoben und verworfen worden ist. Diese Funktionsmängel sind bei dem Dichteinsatz gemäß der Erfindung behoben.

Ein weiterer Schutz wird darüber hinaus durch den innenflanschartigen Kragenabschnitt der Schutzmanschette erzielt, der zunächst zuverlässig verhindert, daß beim Vergießen des Dichteinsatzes in der Rohrmuffe Vergußmasse auch nur versehentlich oder durch Überlauf in den Ringraum zwischen Schutzmanschette und Dichtlippe gelangt. Dieser innenflanschartige Kragenabschnitt der Schutzmanschette dient dabei insbesondere bei kegliger Ausgestaltung als Eingußtrichter für den Ringraum zwischen Muffe und Dichteinsatz. Überdies schützt dieser innenflanschartige Abschnitt der Schutzmanschette die stirnseitige Ringfläche der nach axial auswärts weisenden Dichtlippe gegen Beschädigung und/oder Fehlpositionierung bei nicht koaxial eingeschobenem Spitzende. Diese Schutzfunktion erfolgt dabei zum einen unmittelbar durch eine Abdeckfunktion, zum anderen und zum wesentlichen jedoch durch eine zwangsläufige Vorzentrierung des Spitzendes.

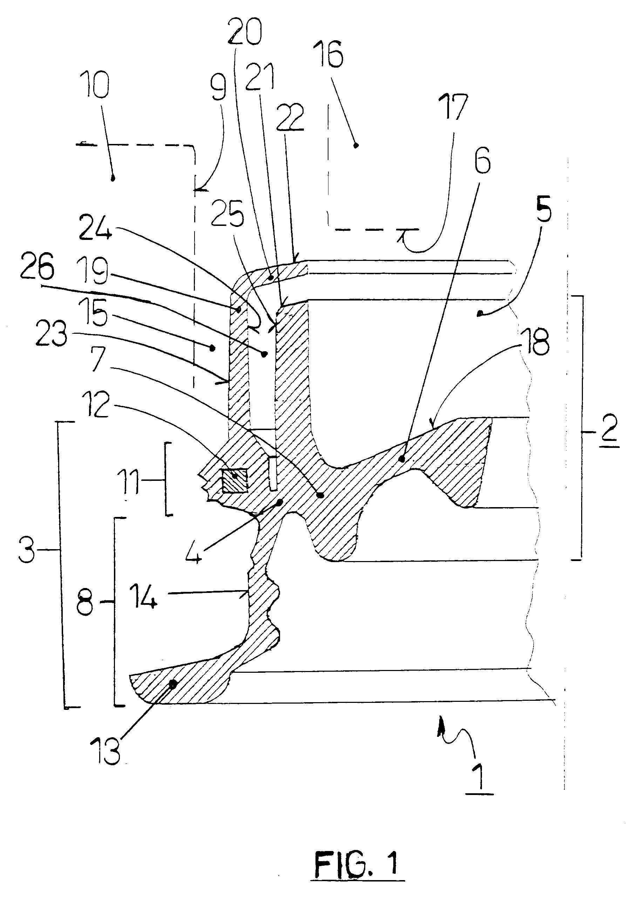

Die Erfindung ist im folgenden anhand eines Ausführungsbeispiels in Verbindung mit der Zeichnung näher erläutert. Dabei zeigt die einzige Figur, nämlich die
- Fig. 1: im axialen Schnurprofil ein Ausführungsbeispiel eines Dichteinsatzes, bei dem die Merkmale der Erfindung verwirklicht sind.

In der Fig. 1 ist im Axialschnitt das Schnurprofil eines Dichteinsatzes gezeigt, bei dem die Merkmale der Erfindung verwirklicht sind. Der Dichteinsatz 1 besteht aus einem Doppellippenring 2 und einem Haltering 3, die über einen flexiblen Verbindungsbereich 4 miteinander verbunden sind.

Der Doppellippenring, der den eigentlichen Dichtring des Dichteinsatzes bildet, besteht aus einer ersten Dichtlippe 5, die in dem in Fig. 1 gezeigten unverformten Zustand vor dem Einschieben des Spitzendes zumindest im wesentlichen axial auswärts zur Muffenöffnung hin ausgerichtet ist, und aus einer zweiten Dichtlippe 6, die sich zumindest im wesentlichen nach radial einwärts erstreckt, sowie einem Basisbereich 7, der den verstärkten Wurzelbereich für die beiden zumindest im wesentlichen V-förmig gegeneinanderstehenden Dichtlippen 5,6 des Doppellippendichtringes 2 bildet.

Der Haltering 3 besteht aus einem Stützringabschnitt 8, der den Haltering muffenspiegelseitig an der Innenwand 9 der in Fig. 1 schematisch angedeuteten Muffe 10 abstützt, und aus einem Verankerungsring 11, der in dem hier gezeigten Ausführungsbeispiel durch eine Stahlringeinlage 12 verstärkt ist.

In der aus Fig. 1 ersichtlichen Weise ist der größte Außendurchmesser des Dichteinsatzes 1 am Fuß 13 des Stützringabschnitts 8 im unverformten und entspannten Zustand des Dichtringes deutlich größer als der auch im Fertigungstoleranzbereich größte lichte Innendurchmesser der Muffe 10. Dadurch liegt der Fußring 13 des Stützringabschnitts 8 des Dichteinsatzes 1 nach dem Einsetzen in die Muffe 10 unter Vorspannung an der Innenwand 9 der Muffe 10, vorzugsweise in einer separaten Aufnahmenut in der Innenwand 9 der Muffe 10, an, so daß zwischen der Innenwand 9 der Muffe 10 und der Außenwand 14 des Dichteinsatzes ein becherartiger, muffenkragenseitig offener und muffenspiegelseitig durch den Stützringabschnitt 8 des Halteringes 3 gegenüber der Muffeninnenwand 9 abgedichteter Ringraum 15 abgegrenzt ist, der im einsatzfertigen Einbauzustand mit einer üblichen Vergußmasse ausgefüllt ist.

In der ebenfalls aus Fig. 1 ersichtlichen Weise sind die beiden Dichtlippen 5,6 des Doppellippenringes 2 so bemessen, daß der lichte Innendurchmesser der axial auswärts weisenden ersten Dichtlippe 5 größer als der in einem Fertigungstoleranzbereich größte Außendurchmesser des in der Fig. 1 schematisch angedeuteten Spitzendes 16 ist, während gleichzeitig der größte lichte Innendurchmesser der zweiten, radial einwärts weisenden Dichtlippe 6 deutlich kleiner als der im Fertigungstoleranzbereich kleinste Außendurchmesser des Spitzendes 16 ist, so daß die Stirnringfläche 17 des Spitzendes 16 auch noch beim nicht koaxialen Einschieben und Hindurchschieben des Spitzendes 16 durch den Doppellippenring zuverlässig auf ihrem gesamten Umfang auf der axial auswärts weisenden Ringfläche 18 der zweiten Dichtlippe 6 aufsetzt und auf diese Weise den Doppellippenring 2 bestimmungsgemäß nach axial einwärts verschwenkt.

Erfindungswesentlich gekennzeichnet ist der in der Fig. 1 gezeigte Dichteinsatz durch eine zwischen der axial auswärts weisenden Dichtlippe 5 und der Innenwand 9 der Rohrmuffe 10 zumindest im wesentlichen zu der axial auswärts weisenden Dichtlippe 5 koaxial ausgerichtete und am Haltering 3, hier speziell am Verankerungsring 11, angeformte und zumindest im wesentlichen zylindrische Manschette 19. Diese zylindrische Manschette 19 läuft muffenkragenseitig in einen kreisringförmigen Innenflansch 20 aus, der die zum Muffenkragen hin weisende stirnseitige Ringfläche 21 der Dichtlippe 5 mit axialem Abstand radial übergreift. Dabei ist der lichte Innendurchmesser dieses Manschettenflansches 20 zumindest im wesentlichen gleich oder nur wenig kleiner als der lichte Innendurchmesser der axial auswärts weisenden Dichtlippe 5.

Die stirnseitige, nach axial auswärts weisende Ringfläche 22 des Manschettenflansches 20 kann dabei eine in der Radialebene des Dichtsystems liegende Kreisringfläche sein, ist vorzugsweise jedoch in der in Fig. 1 angedeuteten Weise mehr oder minder stark ausgeprägt eine Konusfläche mit einem sich nach axial einwärts öffnenden Konusöffnungswinkel. Auf diese Weise dient die axial auswärts weisende Ringfläche 22 des Innenflansches 20 der Manschette 19 als Eingußtrichter beim Einfüllen der Vergußmasse in den Ringraum 15, wobei die zylindrische Außenwand 23 der Manschette 19 ebenfalls Innenwandbestandteil des becherförmigen Vergußringraums 15 ist.

In diesem Zusammenhang ist wesentlich, daß der Außendurchmesser der Manschette 19 kleiner als der größte Außendurchmesser des Stützringabschnitts 8 im Fußbereich 13 ist und daß der axial innenliegende Fußabschnitt der zylindrischen Manschette 19 so am Haltering 3 angeformt ist, daß ein geschlossener Ringabschnitt 15 zur Innenwand 9 der Muffe 10 gebildet wird, der einerseits ausreichend breit zum Vergießen ist, andererseits in der Weise dicht gestaltet ist, daß keine Vergußmasse mit dem Doppellippenring in Berührung gelangt.

Nicht wesentlich ist dagegen, daß die Manschette 19 in der in Fig. 1 gezeigten Weise am Haltering 11 angeformt ist. Prinzipiell kann die Anbindung der Manschette 19 auch in anderer Weise erfolgen. Bei dem in Fig. 1 gezeigten Ausführungsbeispiel der Erfindung wird durch die Anbindung der Manschette 19 am radial auswärts vom Haltering 3 vorstehenden Verankerungsring 11 erreicht, daß zwischen der Innenwand 24 der Manschette 19 und der Außenwand 15 der nach axial auswärts weisenden Dichtlippe 5 gebildete Zylinderringspalt 26, der frei von Vergußmasse bleibt und durch den Innenflansch 20 der Manschette 19 geschützt ist, als Verformungs-Ausweichraum für die Dichtlippe 5 dient. Die Dichtlippe 5 bleibt dadurch beweglich und wird auch bei verkantetem Einschieben des Spitzendes nicht durch Verpressung beschädigt, sondern kann elastisch in diesen Ausweichraum ausweichen. Jedoch selbst in dem Fall, daß die radial innenliegende Zylinderwandfläche 24 der Manschette 19 und die radial außenliegende Zylindermantelfläche 25 der axial auswärts weisenden Dichtlippe 5 unmittelbar aufeinanderliegen, bleibt die Dichtlippe 5 auf der gummielastischen Unterlage der Manschette 19 noch immer schonender montiert als nach dem Stand der Technik, nach dem die Außenwandfläche 25 der Dichtlippe 5 unmittelbar flächenbündig auf der nach dem Aushärten der Vergußmasse formsteifen Oberfläche dieser Masse.

Insgesamt wird durch die in Fig. 1 gezeigte Ausgestaltung des Dichteinsatzes gegenüber dem Dichteinsatz nach dem Stand der Technik eine sichere Beweglichkeit des Doppellippenringes 2 und ein mechanischer Beschädigungsschutz der Dichtlippe 5 und damit eine wesentliche Verbesserung der funktionellen Sicherheit des Dichteinsatzes erzielt.

## Patentansprüche

1. Vergiessbarer Dichteinsatz aus gummielastischem Werkstoff für die Muffe einer ringgedichteten Rohrsteckverbindung zwischen einer Muffe (10) und einem Spitzende (16), mit einem über einen ringförmigen Basisbereich (7) zu einem Doppellippenring (2) miteinander verbundenen ringförmigen Dichtlippenpaar, dessen erste Dichtlippe (5) vor dem Einschieben des Spitzendes zumindest im wesentlichen axial zur Muffenöffnung zeigt und dessen zweite Dichtlippe (6) sich zumindest im wesentlichen radial einwärts erstreckt, mit einem am Basisbereich des Doppellippenringes angeformten Haltering (3), der muffenspiegelseitig über einen Stützringabschnitt (8) an der Innenwand (9) der Muffe (10) abgestützt ist und, bezogen auf die axiale Länge des Dichteinsatzes (1), im Bereich des Basisbereichs (7) des Doppellippenringes (2) einen nach radial außen vorspringenden Verankerungsring (11) aufweist, und mit einem flexiblen Verbindungsbereich (4) zwischen Haltering (3) und Basisbereich (7) des Doppellippenringes (2) für ein Verschwenken des Dichtlippenpaares (5,6) in Dichtanlage gegen die Außenwand des Spitzendes (16), wodurch ein becherartiger, muffenkragenseitig offener und muffenspiegelseitig durch den Stützringabschnitt des Halteringes gegenüber der Muffeninnenwand abgedichteter Ringraum (15) zwischen der Aussenwand (14,23) des Dichteinsatzes (1) und der Innenwand (9) der Rohrmuffe (10) abgegrenzt ist, der mit einer üblichen Vergußmasse ausgefüllt ist,
**gekennzeichnet** durch
eine zwischen der axial auswärtsweisenden Dichtlippe (5) und der Innenwand (9) der Rohrmuffe (10) zumindest im wesentlichen zu der axial auswärtsweisenden Dichtlippe (5) koaxial ausgerichtete und am Haltering (3) angeformte, zumindest im wesentlichen zylindrische Manschette (19), die muffenkragenseitig in einen zumindest im wesentlichen kreisringförmigen Innenflanschring (20) ausläuft, der die zum Muffenkragen weisende stirnseitige Ringfläche (21) der Dichtlippe (5) mit axialem Abstand radial übergreift, wobei der lichte Innendurchmesser des Manschettenflansches (20) zumindest im wesentlichen gleich oder nur geringfügig kleiner als der lichte Innendurchmesser der axial auswärtsweisenden Dichtlippe (5) und der Aussendurchmesser der Manschette (19) kleiner als der grösste Aussendurchmesser des Stützringabschnitts (8) des Halterings (3) sind.

2. Vergiessbarer Dichteinsatz nach Anspruch 1,
dadurch **gekennzeichnet**,
dass, bezogen auf die Rohrmuffe (10), die axial auswärtsliegende Fläche (22) des Manschettenflansches (20) eine Konusfläche ist, deren Durchmesser von axial auswärts nach axial einwärts zunimmt.

3. Vergiessbarer Dichteinsatz nach einem der Ansprüche 1 oder 2,
dadurch **gekennzeichnet,**
dass die Manschette (19) an ihrem axial inneren Ende am Verankerungsring (11) angeformt ist.

## Claims

1. A caulkable elastomeric insert seal for the sleeve or muff or the like of a ring-sealed push-in tube or pipe connection between a sleeve or muff or the like (10) and a male end (16), the insert seal having: a pair of sealing lips interconnected by way of an annular base zone (7) to form a double-lipped ring (2), a first sealing lip (5) of the pair extending at least substantially axially of the sleeve opening before insertion of the male end while the second lip (6) of the pair extends at least substantially radially inwards; a retaining ring (3) which is formed on the base zone (7) of the ring (2) and which bears on the sleeve surface side by way of a bearing ring part (8) on the sleeve inner wall (9) and, referred to the axial length of the sealing insert (1), has near the base zone (7) a radially outwardly projecting fixing or anchoring ring (11); and a flexible connecting zone (4) between the retaining ring (3) and the base zone (7) of the ring (2) for pivoting the sealing lip pair (5, 6) into sealing engagement with the outer wall of the male end (16), so that a beaker-like annular chamber (15) which is open on the sleeve collar side and sealed off from the sleeve inner wall (9) on the sleeve surface side by the bearing ring part (8) of the retaining ring is bounded between the insert seal outer wall (14, 23) and the sleeve inner wall (9) and is filled with a conventional caulking composition,
characterised by
an at least substantially cylindrical dished member (19) which is so aligned between the axially outwardly extending lip (5) and the sleeve inner wall (9) as to be at least substantially coaxial of the lip (5) and which is formed on the retaining ring (3) and which terminates on the sleeve collar side in an at least substantially annular inner flange ring (20) which engages radially and with axial separation over that annular end surface (21) of the lip (5) which extends towards the sleeve collar, the internal diameter of the flange (20) of the member (19) being at least substantially the same as or only slightly less than the internal diameter of the axially outwardly extending lip (5) and the outer diameter of the member (19) being less than the greatest outer diameter of the bearing ring part (8) of the retaining ring (3).

2. An insert seal according to claim 1,
characterised in that,
referred to the sleeve (10), the axially outer surface (22) of the flange (20) is a conical surface whose diameter increases axially inwards.

3. An insert seal according to claim 1 or 2,
characterised in that
the dished member (19) is formed at its axially inner end on the fixing ring (11).

## Revendications

1. Insert d'étanchéité scellable en matériau élastique à base de caoutchouc pour le manchon d'un assemblage de tuyaux à emboîtement avec bague d'étanchéité entre un manchon (10) et une extrémité pointue (16), avec une paire de lèvres d'étanchéité de forme annulaire, assemblées l'une à l'autre pour former une bague à double lèvre (2) par l'intermédiaire d'une région de base annulaire (7), dont la première lèvre d'étanchéité (5) est orientée, avant l'insertion de l'extrémité pointue, au moins essentiellement en direction axiale vers l'ouverture du manchon et dont la deuxième lèvre d'étanchéité (6) s'étend, au moins essentiellement, en direction radiale vers l'intérieur, avec une bague de support (3) formée dans la région de base de la bague à double lèvre, qui est supportée, du côté du miroir du manchon sur la paroi intérieure (9) du manchon (10) par l'intermédiaire d'une section de bague d'appui (8) et présente une bague d'ancrage (11) faisant saillie radialement vers l'extérieur dans la zone de la région de base (7) de la bague à double lèvre (2) par rapport à la longueur axiale de l'insert d'étanchéité (1) et avec une région d'assemblage flexible (4) entre la bague de support (3) et la région de base (7) de la bague à double lèvre (2) pour permettre un pivotement de la paire de lèvres d'étanchéité (5, 6) en position d'étanchéité contre la paroi extérieure de l'extrémité pointue (16), ce qui délimite un espace annulaire (15) en forme de cuvette, ouvert du côté du collet du manchon et fermé du côté du miroir du manchon par la section de bague d'appui de la base de support, par rapport à la paroi intérieure du manchon, entre la paroi extérieure (14, 23) de l'insert d'étanchéité (1) et la paroi intérieure (9) du manchon de tuyau (10), cet espace étant rempli de la masse de scellement habituelle,
caractérisé par une manchette (19) au moins essentiellement cylindrique, formée sur la bague de support (3) et orientée de manière au moins essentiellement coaxiale par rapport à la lèvre d'étanchéité (5) tournée vers l'extérieur, entre la lèvre d'étanchéité (5) tournée axialement vers l'extérieur et la paroi intérieure (9) du manchon de tuyau (10), cette manchette se continuant du côté du collet du manchon par une bague à flasque intérieur (20) essentiellement en forme de bague circulaire, qui dépasse la surface annulaire (21) frontale tournée vers le collet de manchon de la lèvre d'étanchéité (5) suivant une distance axiale, tandis que le diamètre de passage intérieur du flasque de manchette (20) est au moins essentiellement égal ou seulement légèrement plus petit que le diamètre intérieur de passage de la lèvre d'étanchéité (5) tournée axialement vers l'extérieur et que le diamètre extérieur de la manchette (19) est plus petit que le plus grand diamètre extérieur de la section de bague d'appui (8) de la bague de support (3).

2. Insert d'étanchéité scellable selon la revendication 1, caractérisé en ce que la surface (22) située axialement vers l'extérieur par rapport au manchon de tuyau (10) du flasque de manchette (20) est une surface conique dont le diamètre augmente axialement de l'extérieur vers l'intérieur.

3. Insert d'étanchéité scellable selon l'une des revendications 1 ou 2, caractérisé en ce que la manchette (19) est formée, à son extrémité axialement intérieure, sur la bague d'ancrage (11).
